# EUROPEAN PATENT SPECIFICATION

(11) **EP 0 731 019 B1**
(45) Date of publication and mention of the grant of the patent: **16.02.2000**
(21) Application number: 96301544.1
(22) Date of filing: 06.03.1996
(51) Int. Cl.: B62L 3/02

(54) **Bicycle brake operation device**
Fahrrad-Bremsbetätigungsgerät
Dispositif d'actionnement d'un frein de bicyclette

(30) Priority: 07.03.1995 JP 4749595
(43) Date of publication of application: 11.09.1996
(73) Proprietor: Shimano Inc., Osaka 590-0824 (JP)
(72) Inventor: Nakashima, Yuji, c/o Shimano Inc., Sakai, Osaka 590 (JP)
(74) Representative: Pacitti, Pierpaolo A.M.E.

(56) References cited:
- EP-A- 0 435 248
- US-A- 5 279 179
- US-A- 5 448 927

## Description

### BACKGROUND OF THE INVENTION

The present invention is directed to bicycle brake operating devices and, more specifically, to a bicycle brake operating device where a pivoting lever is connected to a force transmission element for operating the bicycle brake.

Brake operating devices which are used to operate bicycle brake devices are usually mounted on the handlebars of bicycles. Generally, such brake operating devices have a bracket which can be attached to the handlebar, and an operating lever which is pivotally supported at one end on the bracket. A wire which is used to drive the brake device is anchored to the operating lever via an anchoring member.

Devices which are designed so that the operating force and operating stroke in such brake operating devices can be altered as desired by the operator have already been proposed. For example, such devices are designed so that the lever ratio can be altered by altering the distance between the center of rotation of the operating lever and the anchored portion of the wire. Here, the term "lever ratio"refers to the ratio L/h obtained by dividing the distance L between the center of rotation of the operating lever and the operating point (i.e., the point where the operator actually grips the operating lever and applied an operating force) by the distance h between the center of rotation and the wire anchoring point.

If it is desired to obtain a strong braking force, i.e., a strong wire pulling force, by means of a light operating force, it is-necessary to increase the lever ratio. The lever ratio can be increased by changing the position of the wire anchoring point so that the distance between the center of rotation of the operating lever and the wire anchoring point is reduced. In this case, however, the pulling rate of the wire (i.e., the amount of movement of the wire relative to the operating angle of the operating lever) is reduced compared to a case where the lever ratio is small. If the pulling rate of the wire is reduced, the operating lever may contact the handlebar before the brake acts sufficiently.

Accordingly, devices which are designed so that the wire anchoring point can be altered during the brake operating process have been proposed, as disclosed in Japanese Laid-Open Patent Application No. H3-292280. In this device, the lever ratio varies with the operation of the operating lever. As a result, a large braking force can be obtained by means of a small operating force, while the pulling rate of the wire is maintained. Unfortunately, the rate of variation in the brake operating force during the brake lever operating process, and the final brake operating force, are determined in a fixed manner. Accordingly, the feeling of brake operation cannot be adjusted to suit the user.

### SUMMARY OF THE INVENTION

The present invention is directed to a brake operating device wherein the rate of variation of the lever ratio may be adjusted so that the operating force and pulling rate of the brake wire can be adjusted to accommodate different users. In one embodiment of the present invention, a brake operating device includes a bracket for attachment to the bicycle, an operating lever pivotally supported on the bracket about a pivot point, and a guide having a path that extends toward the pivot point. An anchoring member is connected to the force transmission element and is disposed for movement along the path of the guide during operation of the operating lever. An adjustment mechanism is provided for adjusting a range of movement of the anchoring member along path of the guide.

The adjustment mechanism may take many different forms. For example, the adjustment mechanism may comprise a screw or some other stopper disposed along the path of the guide. The adjustment mechanism may also comprise a cover having a plurality of positioning locations for positioning over the guide, and a stopper for placement at a selected positioning location for limiting movement of the anchoring member along the guide.

In a more specific embodiment, the operating lever pivots between a first lever position and a second lever position. An angle formed by the axis and the force transmission element is an obtuse angle when the operating lever is disposed in the first lever position, and the angle formed by the axis and the force transmission element is an acute angle when the operating lever is disposed in the second lever position. The anchoring member is disposed in a first guide position when the operating lever is disposed in the first lever position, and the anchoring member is disposed in a second guide position when the operating lever is disposed in the second lever position. The brake lever is structured so that the anchoring member immediately moves from the first guide position to the second guide position when the angle formed by the axis and the force transmission element changes from an obtuse angle to an acute angle.

### BRIEF DESCRIPTION OF THE DRAWINGS

Figure 1 is a plan view of a particular embodiment of a brake operating device according to the present invention;
Figure 2 is a schematic view illustrating the operation of the brake operating device shown in Figure 1;
Figure 3 is a schematic view illustrating the wire pulling rate of the brake operating device shown in Figure 1;
Figure 4 is a plan view of an alternative embodiment of a brake operating device according to the present invention;
Figure 5 is a cross sectional view of a particular embodiment of an adjustment mechanism shown in Figure 4; and
Figure 6 is a plan view of another embodiment of a brake operating device according to the present invention.

### DETAILED DESCRIPTION OF THE EMBODIMENTS

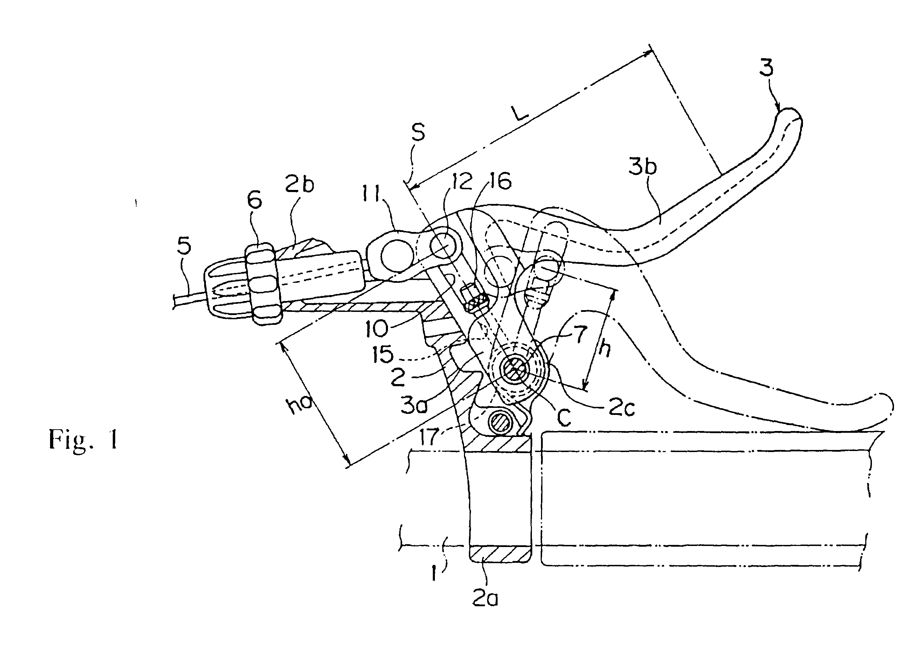

Figure 1 is a plan view of a particular embodiment of a brake operating device according to the present invention. The bicycle brake operating device shown in Figure 1 has a bracket 2 which is attached to the handlebar 1 of a bicycle, and an operating lever 3 which is supported at one end on the bracket 2 so that the operating lever 3 is free to pivot. The bracket 2 is formed in a reverse "L" shape. A tubular portion 2a which is fitted over the handlebar 1 is formed on one end of the bracket 2, while a wire attachment portion 2b on which a wire supporting member 6 which is used to support a brake wire 5 is mounted is formed on the other end of the bracket 2. Furthermore, a lever supporting portion 2c which is used to support the operating lever 3 is formed in the vicinity of the tubular portion 2a.

The operating lever 3 has a supporting portion 3a, one end of which is supported by the lever supporting portion 2c of the bracket 2 so that the operating lever 3 is free to pivot, and an operating portion 3b which extends toward the side from the other end of the supporting portion 3a. The supporting portion 3a is attached to the bracket 2 by means of a pin 7. A slot 10 which extends toward the center of rotation C of the operating lever 3 is formed in the supporting portion 3a. The center line of this slot 10 (with respect to the width of the slot) intersects the center of rotation C. A wire anchoring member 11 is slidably disposed in the slot 10 of the operating lever 3 via an anchoring pin 12. The end portion of a brake wire 5 is anchored to the wire anchoring member 11.

A screw hole 15 which extends toward the center of rotation C from one end of the slot 10 is formed in the operating lever 3, and a screw 16 is screwed into this screw hole 15. The head portion of the screw 16 protrudes into the slot 10. In this way, an adjustment mechanism is formed by the screw hole 15 and screw 16, so that the range of movement of the wire anchoring member 11 inside the slot 10 can be adjusted by adjusting the amount of protrusion of the screw 16 into the slot 10.

A return spring 17 is installed around the center of rotation of the operating lever 3. One end of this return spring 17 is anchored to the bracket 2, while the other end is anchored to the operating lever 3. Return spring 17 causes the operating lever 3 to be constantly driven toward its initial attitude (i.e., the attitude indicated by the solid line in Figure 1).

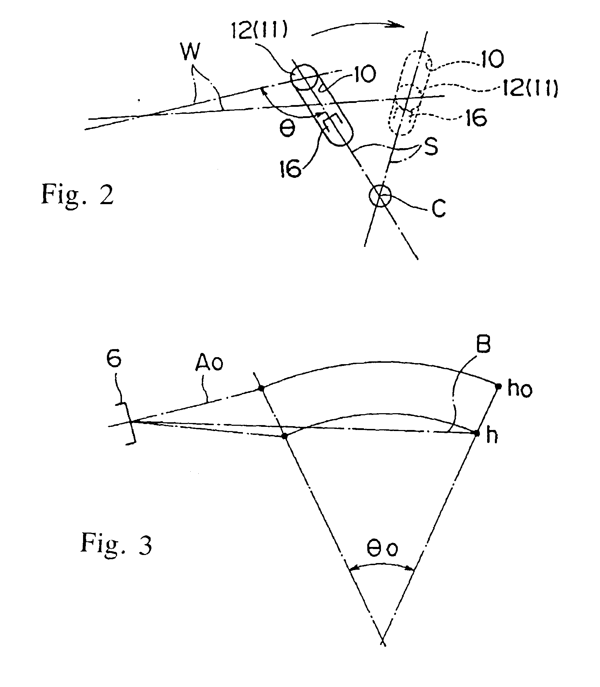

The operation of the above device will be described with reference to Figure 2. As shown in Figure 2, the center line of the brake wire 5 is W, the center line of the slot 10 (with respect to the width of the slot) is S, and the angle formed by the center lines W and S is θ. When the operating lever 3 is not being operated, the pin 12 of the wire anchoring member 11 (hereafter referred to simply as the "wire anchoring member 11") is positioned at the most distant position from the center of rotation C inside the slot 10, as shown by the solid lines in Figures 1 and 2. In this state, as is shown in Figure 1, the lever ratio is L/h₀, where L is the distance from the center of rotation C to the operating position (with respect to the operating lever 3), and h₀ is the distance from the center of rotation C to the position of the wire anchoring member 11. This lever ratio L/h₀ is the smallest lever ratio that can be adopted by the present device. Furthermore, the angle θ formed by the center line W and center line S is an obtuse angle.

When the operating lever 3 is pulled toward the handlebar 1, the brake wire 5 is pulled so that the brake shoes approach the rim of the wheel. In this case, the angle θ in Figure 2 approaches 90 degrees. Until θ reaches 90 degrees, the wire anchoring member 11 remains positioned at one end of the slot 10. Accordingly, the lever ratio is small and the brake wire pulling rate is large. As the operation of the operating lever 3 is continued so that θ reaches and then exceeds 90 degrees, the wire anchoring member 11 moves along the slot 10 toward the center of rotation C. Then, when the wire anchoring member 11 contacts the tip of the screw 16, this movement stops. If the distance between the wire anchoring member 11 and center of rotation C at this point is taken as h (as shown in Figure 1), then the lever ratio in this state is L/h. Since h < h₀, the lever ratio in the latter half of the braking operation is greater than the initial lever ratio. Accordingly, in this latter half of the braking operation, a large braking force can be obtained by applying a small operating force.

Next, in cases where the operating force is to be altered, the screw 16 is adjusted so that the amount of protrusion of the screw 16 into the slot 10 is altered. This adjustment makes it possible to adjust h in Figure 1, so that the final lever ratio in the operating process (hereafter referred to as the "final lever ratio") can be freely varied as desired by the operator, etc. Specifically, if the amount of protrusion of the screw 16 into the slot 10 is increased, h becomes relatively larger, so that the final lever ratio becomes relatively smaller. In this case, the wire pulling rate becomes relatively large, but the required operating force becomes heavier. Conversely, if the amount of protrusion of the screw 16 into the slot 10 is reduced, h becomes relatively smaller, so that the final lever ratio becomes relatively larger. In this case, a large braking force can be obtained by applying a small operating force.

The brake wire pulling rate will be described with reference to Figure 3. In Figure 3, the overall operating angle of the operating lever is θ₀. In this case, when the wire anchoring member 11 moves during the braking operation and stops in the position of h (h representing the distance between the wire anchoring member 11 and the center of rotation C), the final amount of protrusion of the brake wire 5 from the supporting member 6 is B. Furthermore, the amount of protrusion of the brake wire 5 from the supporting member 6 in the initial state prior to the initiation of the braking operation is A₀. In this case, the brake wire pulling rate is (B - A₀).

As is clear from the above description, a large brake wire pulling rate can be assured by minimizing the amount of protrusion A₀ of the wire in the initial state. Specifically, in the initial state, the position of the wire anchoring member 11 inside the slot 10 is set so that the position is distant from the center of rotation C. In this embodiment, the respective members are installed so that the center line W of the brake wire 5 and the center line S of the slot 10 are perpendicular half way through the braking operation, that is when the operating lever is operated to an angle of half θ₀.

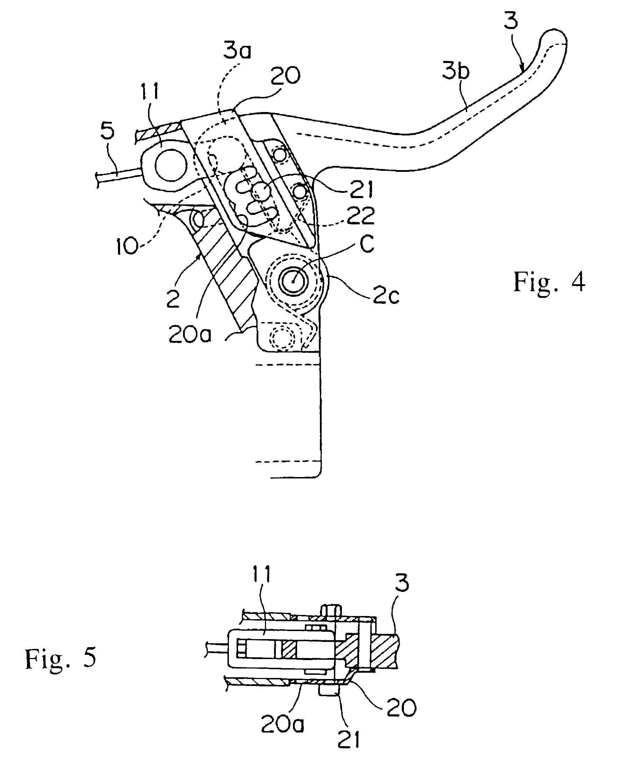

A second embodiment of the present invention is illustrated in Figures 4 and 5. In this embodiment, only the adjustment mechanism which adjusts the range of movement of the wire anchoring member differs from that of the above mentioned first embodiment. The remaining structure is similar to that of the first embodiment. Accordingly, only the construction of the adjustment mechanism will be described below.

The adjustment mechanism in this embodiment includes a covering member 20 and a pin 21. Covering member 20 is mounted on the supporting portion 3a of the operating lever 3 so that the covering member 20 covers the slot 10 from the outside. The covering member 20 has a U-shaped cross section so that the covering member 20 can clamp the supporting portion 3a of the operating lever 3 from both sides. Respective "m"-shaped positioning grooves 20a are formed in both side surfaces of the covering member 20. The respective end portions of the grooves 20a act as positioning portions. The pin 21 is mounted so that it passes through the "m"-shaped grooves 20a formed in both side surfaces of the covering member 20, and through the slot 10, and so that the pin 21 can move through the "m"-shaped positioning grooves 20a. Furthermore, a fastening spring 22 is provided so that the pin 21 can be maintained in the respective positioning portions located in the end portions of the grooves 20a.

In this embodiment, the pin 21 moves through the grooves 20a, and is positioned in the respective end portions of the grooves 20a. As a result, the range of movement of the wire anchoring member 11 inside the slot 10 can be adjusted in three steps. Specifically, when the pin 21 is fastened in place in the end portions of the "m"-shaped positioning grooves 20a that are farthest from the center of rotation C, h in the first embodiment has the largest value, so that the final lever ratio has the smallest value in the adjustable range of values. On the other hand, when the pin 21 is positioned closest to the center of rotation, h has the smallest value, so that the final lever ratio has the maximum value. Thus, the final lever ratio can be adjusted in a simple manner merely by moving the pin 21. Furthermore, if the covering member 20 is replaced by a covering member which has different grooves, the final lever ratio can be adjusted using a different adjustment pattern.

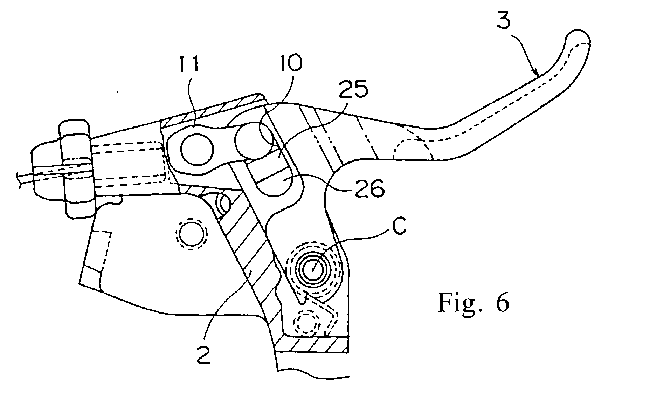

Figure 6 illustrates a third embodiment of the present invention. In this embodiment, only the adjustment mechanism differs from that of the first embodiment. The remaining structure is similar to that of the first embodiment. The adjustment mechanism in this embodiment is formed from two resin members 25, 26 which are inserted into the slot 10 of the operating lever 3. These resin members 25, 26 possess resiliency, and have a width which is greater than the width of the slot 10 prior to the insertion of the resin members 25, 26 into the slot 10. These resin members 25, 26 are fastened in prescribed positions inside the slot 10 by being pushed into the slot 10 so that the range of movement of the wire anchoring member 11 inside the slot 10 may be adjusted.

If both of the two resin members 25, 26 are inserted into the slot 10, the range of movement of the wire anchoring member 11 is extremely restricted. Specifically, this range of movement consists of the total range obtained by combining the slight gap between the wire anchoring member 11 and the resin member 25, and the amount of elastic deformation of both resin members 25, 26 that occurs when the wire anchoring member 11 contacts the resin members 25, 26. In this case, h in the embodiment is large, so the final lever ratio is small. This ensures a sufficient wire pulling rate. If the resin member 25 is removed, the range of movement of the wire anchoring member 11 is increased, so that the final lever ratio becomes relatively larger. In this case, a large braking force can be obtained by applying a small operating force.

In this embodiment, the adjustment mechanism can be realized using simple portions. Furthermore, by preparing various types of resin members, it is possible to alter the operating force and stroke in a simple and inexpensive manner.

While the above is a description of various embodiments of the present invention, further modifications may be employed without departing from the scope of the present invention. For example, in the embodiments described above, the system was designed so that the final position of the wire anchoring member in the brake operating process was adjusted. However, it would also be possible to adjust the initial position of the wire anchoring member. Thus, the scope of the invention should not be limited by the specific structures disclosed. Instead, the true scope of the invention should be determined by the following claims. Of course, although labeling symbols are used in the claims in order to facilitate reference to the figures, the present invention is not intended to be limited to the constructions in the appended figures by such labeling.

## Claims

1. A bicycle brake operating device for operating a force transmission element (5) that is used to control a brake device, the bicycle brake operating device comprising:
a bracket (2) for attachment to the bicycle;
an operating lever (3) pivotally supported on the bracket about a pivot point (C);
a guide (10) having a path that extends toward the pivot point (C);
an anchoring member (11) connectable to the force transmission element (5) and disposed for movement along the path of the guide during operation of the operating lever; characterised by
an adjustment mechanism (15, 16, 21, 25, 26) which is used to adjust a range of movement of the anchoring member along the path of the guide.

2. The device according to Claim 1 wherein the adjustment mechanism comprises a screw (16) disposed along the path of the guide.

3. The device according to Claim 1 wherein the adjustment mechanism comprises a stopper (21, 25, 26) disposed along the path of the guide.

4. The device according to Claim 3 wherein the stopper comprises a resilient member (25, 26).

5. The device according to Claim 1 wherein the adjustment mechanism comprises:
a cover (20) for positioning over the guide, the cover including a plurality of positioning locations; and
a stopper for placement at a selected positioning location for limiting movement of the anchoring member along the path of the guide.

6. The device according to Claim 5 wherein the cover defines a plurality of positioning grooves for forming the plurality of positioning locations (20a), and wherein the stopper comprises a pin (21) which may be selectively placed into one of the positioning grooves.

7. The device according to any preceding Claim wherein the path of the guide extends radially outwardly from the pivot point along a substantially straight axis (S).

8. The device according to Claim 7 wherein the operating lever pivots between a first lever position and a second lever position, wherein an angle formed by the axis of the path of the guide and the force transmission element is an obtuse angle when the operating lever is disposed in the first lever position, and wherein the angle formed by the axis and the force transmission element is an acute angle when the operating lever is disposed in the second lever position.

9. The device according to Claim 8 wherein the anchoring member is disposed in a first guide position when the operating lever is disposed in the first lever position, wherein the anchoring member is disposed in a second guide position when the operating lever is disposed in the second lever position, and wherein the anchoring member immediately moves from the first guide position to the second guide position when the angle formed by the axis and the force transmission element changes from an obtuse angle to an acute angle.

10. The device according to Claim 1 wherein the operating lever defines an opening for forming the guide.

11. The device according to either one of Claims 1 or 10 wherein the operating lever defines a slot which extends radially outwardly from the pivot point for forming the guide.

12. The device according to Claim 11 wherein the adjustment mechanism comprises a screw (16) disposed in the slot.

13. The device according to Claim 12 wherein the slot extends in a substantially straight line, and wherein the screw is threadedly connected to the operating lever along an axis (S) of the slot so that an end of the screw extends into the slot.

14. The device according to Claim 11 wherein the adjustment mechanism comprises a stopper (21, 25, 26) disposed in the slot.

15. The device according to Claim 14 wherein the stopper is removably disposed in the slot.

16. The device according to any one of Claims 5, 6, 14 or 15 wherein the stopper comprises a resilient member (25, 26).

17. The device according to Claim 11 wherein the adjustment mechanism comprises:
a cover (20) for positioning over the slot, the cover including a plurality of positioning grooves; and
a pin (21) for placement at a selected positioning groove for limiting movement of the anchoring member along the slot.

18. The device according to any of Claims 11 to 17 wherein the operating lever pivots between a first lever position and a second lever position, wherein an angle formed by an axis of the slot and the force transmission element is an obtuse angle when the operating lever is disposed in the first lever position, wherein the angle formed by the axis and the force transmission element is an acute angle when the operating lever is disposed in the second lever position, wherein the anchoring member is disposed in a first guide position when the operating lever is disposed in the first lever position, wherein the anchoring member is disposed in a second guide position when the operating lever is disposed in the second lever position, and wherein the anchoring member immediately moves from the first guide position to the second guide position when the angle formed by the axis and the force transmission element changes from an obtuse angle to an acute angle.

## Patentansprüche

1. Eine Fahrrad-Bremsbetätigungsvorrichtung zum Betätigen eines Kraftübertragungselementes (5) zum Regeln einer Bremsvorrichtung, wobei die Fahrrad-Bremsbetätigungsvorrichtung folgendes umfaßt:
eine Halterung (2) zum Befestigen am Fahrrad;
einen Betätigungshebel (3), der drehbar auf der Halterung um einen Drehpunkt (C) gestützt wird;
eine Führung (10), die eine sich zum Drehpunkt (C) erstreckende Bahn aufweist;
einen Verankerungsteil (11), der mit dem Kraftübertragungselement (5) verbindbar ist und zum Bewegen entlang der Führungsbahn während der Betätigung des Betätigungshebels angebracht ist; dadurch gekennzeichnet, daß
ein Einstellmechanismus (15, 16, 21, 25, 26), der zum Einstellen einer Reihe von Verankerungsteilbewegungen entlang der Führungsbahn verwendet wird.

2. Vorrichtung gemäß Anspruch 1, wobei der Einstellmechanismus eine entlang der Führungsbahn angebrachte Schraube (16) beinhaltet.

3. Vorrichtung gemäß Anspruch 1, wobei der Einstellmechanismus einen entlang der Führungsbahn angebrachten Ausrücker (21, 25, 26) beinhaltet.

4. Vorrichtung gemäß Anspruch 3, wobei der Ausrücker einen elastischen Teil (25, 26) beinhaltet.

5. Vorrichtung gemäß Anspruch 1, wobei der Einstellmechanismus folgendes umfaßt:
eine Schutzabdeckung (20) zum Positionieren über der Führung, wobei die Schutzabdeckung eine Vielzahl von Positionierungsstellen beinhaltet; und
einen Ausrücker zum Anbringen an einer ausgewählten Positionierungsstelle zum begrenzten Bewegen des Verankerungsteils entlang der Führungsbahn.

6. Vorrichtung gemäß Anspruch 5, wobei die Schutzabdeckung eine Vielzahl von Positionierungsrillen zum Bilden der Vielzahl von Positionierungsstellen (20a) definiert, und wobei der Ausrücker einen Drehbolzen (21) beinhaltet, der wahlweise in einer der Positionierungsrillen untergebracht werden kann.

7. Vorrichtung gemäß einem der vorhergehenden Ansprüche, wobei die Führungsbahn sich vom Drehpunkt entlang einer im wesentlichen geraden Achse (S) radial nach außen erstreckt.

8. Vorrichtung gemäß Anspruch 7, wobei sich der Betätigungshebel zwischen einer ersten Hebelposition und einer zweiten Hebelposition dreht, wobei ein durch die Achse der Führungsbahn und das Kraftübertragungselement geformter Winkel ein stumpfer Winkel ist, wenn der Betätigungshebel sich in der ersten Hebelposition befindet, und wobei der durch die Achse und das Kraftübertragungselement geformte Winkel ein spitzer Winkel ist, wenn der Betätigungshebel sich in der zweiten Hebelposition befindet.

9. Vorrichtung gemäß Anspruch 8, wobei der Verankerungsteil sich in einer ersten Führungsposition befindet, wenn der Betätigungshebel sich in der ersten Hebelposition befindet, wobei der Verankerungsteil sich in einer zweiten Führungsposition befindet, wenn der Betätigungshebel sich in der zweiten Hebelposition befindet, und wobei der Verankerungsteil sich sogleich von der ersten Führungsposition zur zweiten Führungsposition bewegt, wenn der durch die Achse und das Kraftübertragungselement geformte Winkel von einem stumpfen Winkel zu einem spitzen Winkel geändert wird.

10. Vorrichtung gemäß Anspruch 1, wobei der Betätigungshebel eine Öffnung zum Bilden der Führung definiert.

11. Vorrichtung gemäß Anspruch 1 oder Anspruch 10, wobei der Betätigungshebel einen Schlitz definiert, der sich vom Drehpunkt radial nach außen zum Bilden der Führung erstreckt.

12. Vorrichtung gemäß Anspruch 11, wobei der Einstellmechanismus eine im Schlitz befindliche Schraube (16) beinhaltet.

13. Vorrichtung gemäß Anspruch 12, wobei der Schlitz sich in einer im wesentlichen geraden Linie erstreckt, und wobei die Schraube mit dem Betätigungshebel entlang einer Achse (S) des Schlitzes mit einem Gewinde verbunden ist, so daß ein Ende der Schraube sich in den Schlitz hinein erstreckt.

14. Vorrichtung gemäß Anspruch 11, wobei der Einstellmechanismus einen Ausrücker (21, 25, 26), der innerhalb des Schlitzes angebracht ist, beinhaltet.

15. Vorrichtung gemäß Anspruch 14, wobei der Ausrücker im Schlitz abnehmbar angebracht ist.

16. Vorrichtung gemäß einem der Ansprüche 5, 6, 14 oder 15, wobei der Ausrücker einen elastischen Teil (25, 26) beinhaltet.

17. Vorrichtung gemäß Anspruch 11, wobei der Einstellmechanismus folgendes umfaßt:
eine Schutzabdeckung (20) zum Positionieren über dem Schlitz, wobei die Schutzabdeckung eine Vielzahl von Positionierungsrillen beinhaltet; und
einen Drehbolzen (21) zum Anbringen an einer ausgewählten Positionierungsrille zum begrenzten Bewegen des Verankerungsteils entlang des Schlitzes.

18. Vorrichtung gemäß einem der Ansprüche 11 bis 17, wobei der Betätigungshebel sich zwischen einer ersten Hebelposition und einer zweiten Hebelposition dreht, wobei ein durch die Achse des Schlitzes und das Kraftübertragungselement geformter Winkel ein stumpfer Winkel ist, wenn der Betätigungshebel sich in der ersten Hebelposition befindet, wobei der durch die Achse und das Kraftübertragungselement geformte Winkel ein spitzer Winkel ist, wenn der Betätigungshebel sich in der zweiten Hebelposition befindet, wobei der Verankerungsteil sich in einer ersten Führungsposition befindet, wenn sich der Betätigungshebel in der ersten Hebelposition befindet, wobei der Verankerungsteil sich in einer zweiten Führungsposition befindet, wenn der Betätigungshebel sich in der zweiten Hebelposition befindet, und wobei der Verankerungsteil sich sogleich von der ersten Führungsposition zur zweiten Führungsposition bewegt, wenn der durch die Achse und das Kraftübertragungselement geformte Winkel von einem stumpfen Winkel zu einem spitzen Winkel verändert wird.

## Revendications

1. Un dispositif d'actionnement de frein de bicyclette servant à actionner un élément de transmission de force (5) qui est utilisé pour commander un dispositif de frein, le dispositif d'actionnement de frein de bicyclette comprenant :
une console (2) destinée à être fixée à la bicyclette ;
une manette d'actionnement (3) soutenue sur la console de façon pivotante autour d'une pointe de pivot (C) ;
un guide (10) ayant un trajet qui s'étend vers la pointe de pivot (C) ;
un élément d'ancrage (11) pouvant être raccordé à l'élément de transmission de force (5) et disposé de façon à se déplacer le long du trajet du guide lors de l'actionnement de la manette d'actionnement ; caractérisé par
un mécanisme de réglage (15, 16, 21, 25, 26), lequel est utilisé pour régler une marge de déplacement de l'élément d'ancrage le long du trajet du guide.

2. Le dispositif selon la revendication 1 dans lequel le mécanisme de réglage comprend une vis (16) disposée le long du trajet du guide.

3. Le dispositif selon la revendication 1 dans lequel le mécanisme de réglage comprend une butée (21, 25, 26) disposée le long du trajet du guide.

4. Le dispositif selon la revendication 3 dans lequel la butée comprend un élément résilient (25, 26).

5. Le dispositif selon la revendication 1 dans lequel le mécanisme de réglage comprend :
un couvercle (20) destiné à être positionné sur le guide, le couvercle comprenant une pluralité de lieux de positionnement ; et
une butée destinée à être placée à un lieu de positionnement sélectionné pour assurer le déplacement limité de l'élément d'ancrage le long du trajet du guide.

6. Le dispositif selon la revendication 5 dans lequel le couvercle définit une pluralité de rainures de positionnement afin de former la pluralité de lieux de positionnement (20a), et dans lequel le bouchon comprend une broche (21), laquelle peut être placée de façon sélective dans l'une des rainures de positionnement.

7. Le dispositif selon n'importe quelle des revendication précédente dans lequel le trajet du guide s'étend de façon radiale vers l'extérieur à partir de la pointe de pivot le long d'un axe sensiblement droit (S).

8. Le dispositif selon la revendication 7 dans lequel la manette d'actionnement pivote entre une première position de manette et une seconde position de manette, dans lequel un angle formé par l'axe du trajet du guide et l'élément de transmission de force est un angle obtus lorsque la manette d'actionnement est disposée dans la première position de manette, et dans lequel l'angle formé par l'axe et l'élément de transmission de force est un angle aigu lorsque la manette d'actionnement est disposée dans la seconde position de manette.

9. Le dispositif selon la revendication 8 dans lequel l'élément d'ancrage est disposé dans une première position de guidage lorsque la manette d'actionnement est disposée dans la première position de manette, dans lequel l'élément d'ancrage est disposé dans une seconde position de guidage lorsque la manette d'actionnement est disposée dans la seconde position de manette, et dans lequel l'élément d'ancrage se déplace immédiatement de la première position de guidage à la seconde position de guidage lorsque l'angle formé par l'axe et l'élément de transmission de force passe d'un angle obtus à un angle aigu.

10. Le dispositif selon la revendication 1 dans lequel la manette d'actionnement définit une ouverture servant à former le guide.

11. Le dispositif selon l'une des revendications 1 ou 10 dans lequel la manette d'actionnement définit une fente qui s'étend de façon radiale vers l'extérieur à partir de la pointe de pivot pour former le guide.

12. Le dispositif selon la revendication 11 dans lequel le mécanisme de réglage comprend une vis (16) disposée dans la fente.

13. Le dispositif selon la revendication 12 dans lequel la fente s'étend en une ligne sensiblement droite, et dans lequel la vis est raccordée par filetage à la manette d'actionnement le long d'un axe (S) de la fente de sorte qu'une extrémité de la vis s'étend jusque dans la fente.

14. Le dispositif selon la revendication 11 dans lequel le mécanisme de réglage comprend une butée (21, 25, 26) disposée dans la fente.

15. Le dispositif selon la revendication 14 dans lequel la butée est disposée de façon amovible dans la fente.

16. Le dispositif selon l'une quelconque des revendications 5, 6, 14 ou 15 dans lequel la butée comprend un élément résilient (25,26).

17. Le dispositif selon la revendication 11 dans lequel le mécanisme de réglage comprend :
un couvercle (20) destiné à être positionné sur la fente, le couvercle comprenant une pluralité de rainures de positionnement ; et
une broche (21) destinée à être placée à une rainure de positionnement sélectionnée pour limiter le déplacement de l'élément d'ancrage le long de la fente.

18. Le dispositif selon n'importe laquelle des revendications 11 à 17 dans lequel la manette d'actionnement pivote entre une première position de manette et une seconde position de manette, dans lequel un angle formé par un axe de la fente et l'élément de transmission de force est un angle obtus lorsque la manette d'actionnement est disposée dans la première position de manette, dans lequel l'angle formé par l'axe et l'élément de transmission de force est un angle aigu lorsque la manette d'actionnement est disposée dans la seconde position de manette, dans lequel l'élément d'ancrage est disposé dans une première position de guidage lorsque la manette d'actionnement est disposée dans la première position de manette, dans lequel l'élément d'ancrage est disposé dans une seconde position de guidage lorsque la manette d'actionnement est disposée dans la seconde position de manette, et dans lequel l'élément d'ancrage se déplace immédiatement de la première position de guidage à la seconde position de guidage lorsque l'angle formé par l'axe et l'élément de transmission de force passe d'un angle obtus à un angle aigu.
